# FASCICULE DE BREVET EUROPEEN

(11) **EP 3 292 354 B1**
(45) Date de publication et mention de la délivrance du brevet: **28.08.2024**
(21) Numéro de dépôt: 16726620.4
(22) Date de dépôt: 04.05.2016
(51) Int. Cl.: H02S 30/00, H02S 40/30

(54) **SYSTÈME DE FIXATION D'UN PANNEAU SUR UN LONGERON ET STRUCTURE PORTEUSE LE COMPRENANT**
SYSTEM ZUR BEFESTIGUNG EINER PLATTE AN EINEM TRÄGER UND TRÄGERSTRUKTUR MIT DEM BESAGTEN SYSTEM
SYSTEM FOR ATTACHING A PANEL TO A GIRDER, AND SUPPORTING STRUCTURE INCLUDING SAID SYSTEM

(30) Priorité: 07.05.2015 FR 1554130
(43) Date de publication de la demande: 14.03.2018
(73) Titulaire: Exosun, 33650 Martillac (FR)
(72) Inventeur: PRAT, Alexandre, 47250 Cocumont (FR); PAPONNEAU, François, 33610 Cestas (FR)
(74) Mandataire: Lavoix
(86) Numéro de dépôt international: PCT/FR2016/051065
(87) Numéro de publication internationale: WO 2016/177981

(56) Documents cités:
- EP-A2- 0 905 795
- WO-A1-2013/078533
- DE-U1- 202010 010 969
- DE-U1- 202012 005 671
- US-A- 5 571 338
- US-A1- 2006 118 163
- US-A1- 2013 248 668
- US-B1- 10 256 767
- US-B1- 8 505 864

## Description

L'invention concerne un système de fixation d'au moins un panneau solaire sur une structure porteuse d'un module solaire d'un suiveur solaire, ainsi qu'une structure porteuse d'un module solaire le comportant.

Actuellement, afin d'installer un ensemble de panneaux solaires sur un module solaire d'un suiveur solaire, comme cela est illustré, par exemple, dans les documents US 6 672 018 et DE 20 2012 005671 U1, un système de maintien est utilisé à cette fin. Ce système de maintien comporte un ensemble de longerons comprenant une ouverture allongée longitudinale qui donne aux longerons une forme en « U », en section, le sommet des branches du « U » définissant une surface d'appui sur laquelle viennent en appui, lors d'un montage, les panneaux solaires. Ces derniers sont maintenus plaqués sur les bords de l'ouverture allongée longitudinale à l'aide d'un ensemble de serrage. Toutefois, l'utilisation d'un tel longeron en forme de U en section nécessite de prévoir au niveau de l'ensemble de serrage un agencement évitant, lors du serrage, que les parois latérales du longeron formant les branches du « U » ne s'écartent, d'une part, et, d'autre part, que ces mêmes côtés latéraux formant les branches du « U » ne se rapprochent l'un de l'autre. Cela conduit à la réalisation d'un ensemble de serrage relativement complexe à réaliser et à installer. Au surplus, entre deux ensembles de serrage, les parois latérales du longeron formant les branches du « U » ne sont pas maintenues à distance l'une de l'autre, et sont donc libres de se déformer lorsque l'ensemble des panneaux solaires montés sur ce longeron est soumis à des efforts dus par exemple au vent. Ces sollicitations mécaniques subies par le longeron ont pour conséquence que ce dernier se déforme pour se rapprocher d'une fibre neutre du longeron, ce qui le fragilise.

Un but de l'invention est de fournir un système de fixation d'un panneau, comme un panneau solaire, sur une structure porteuse qui soit simple à mettre en œuvre tout en ayant une tenue mécanique optimale.

A cette fin, il est prévu, selon l'invention, un système de fixation d'au moins un panneau, comme un panneau solaire, sur une structure porteuse comportant au moins un longeron s'étendant selon une première direction, le longeron comportant un rebord de prise et une surface d'appui du panneau, le système comprenant une bride, un crapaud et un ensemble de serrage liant la bride au crapaud agencés de sorte à prendre en sandwiche, lors d'un assemblage, le rebord de prise du longeron et le panneau en appui sur la surface d'appui du longeron, le crapaud comportant une première série de griffes s'étendant en saillie sensiblement parallèlement à un axe de l'ensemble de serrage en direction de la bride, les griffes étant destinées à coopérer, par griffage, avec le rebord de prise du longeron, lors d'un assemblage.

Le système de fixation selon l'invention présente les caractéristiques additionnelles suivantes :
- la première série de griffes est située sur un premier rebord du crapaud ;
- le crapaud comporte une deuxième série de griffes s'étendant en saillie sensiblement parallèlement à l'axe de l'ensemble de serrage en direction de la bride, cette deuxième série de griffes étant destinées à coopérer, par griffage, avec un bord du panneau, lors d'un assemblage ;
- la deuxième série de griffes est située sur un deuxième rebord du crapaud.

Facultativement, le système de fixation selon l'invention présente au moins l'une des caractéristiques additionnelles suivantes :
- les premier et deuxième rebords du crapaud sont sensiblement parallèles l'un par rapport à l'autre et s'étendent en regard l'un de l'autre ;
- le crapaud comporte un doigt d'espacement s'étendant en saillie sensiblement parallèlement à l'axe de l'ensemble de serrage en direction de la bride et agencé de sorte à venir latéralement en appui avec un bord du panneau, lors d'un assemblage ;
- l'ensemble de serrage comporte une vis et un écrou ; et,
- l'ensemble de serrage comporte un rivet structurel.

Il est aussi prévu, selon l'invention, une structure porteuse d'au moins un panneau, comme un panneau solaire, comportant au moins un longeron, comportant un rebord de prise, une surface d'appui du panneau et s'étendant selon une première direction, et au moins un système de fixation présentant au moins l'une des caractéristiques techniques précédentes, le longeron comportant une paroi mince et présentant une section fermée.

Avantageusement, mais facultativement, la structure porteuse selon l'invention présente au moins l'une des caractéristiques additionnelles suivantes :
- le rebord de prise s'étend dans le prolongement de la surface d'appui ;
- la paroi mince est formée d'une tôle métallique mise en forme ; et,
- le rebord de prise est formé par un pliage de la tôle mince sur elle-même.

D'autres caractéristiques et avantages de l'invention apparaîtront lors de la description ci-après d'un mode de réalisation de l'invention ainsi que d'une variante. Aux dessins annexés :
- la figure 1 est une vue partielle tridimensionnelle de dessus d'une structure porteuse selon l'invention comportant un système de fixation selon l'invention ;
- la figure 2 est une vue partielle tridimensionnelle de dessous de la structure porteuse de la figure 1 ;
- la figure 3 est une vue partielle de coté de la structure porteuse de la figure 1 illustrant le système de fixation selon l'invention ;
- la figure 4 est une vue partielle de face de la structure porteuse de la figure 1 illustrant le système de fixation selon l'invention ;
- la figure 5 est une vue tridimensionnelle d'une variante de réalisation d'un crapaud pour le système de fixation selon l'invention ; et,
- la figure 6 est une vue tridimensionnelle d'une variante de réalisation d'une bride pour le système de fixation selon l'invention.

En introduction, un module solaire est positionné sur un sol et comporte, à cet effet, un socle fixé sur ce sol. Le socle supporte un mécanisme d'orientation du module solaire. D'autre part, le module solaire comporte des moyens de traitement d'un rayonnement solaire, comme une série de panneaux solaires 1 qui sont maintenus sur une structure porteuse selon l'invention du module solaire à l'aide d'un système de fixation selon l'invention que nous allons maintenant décrire plus en détails. En variante, le module solaire est une structure fixe.

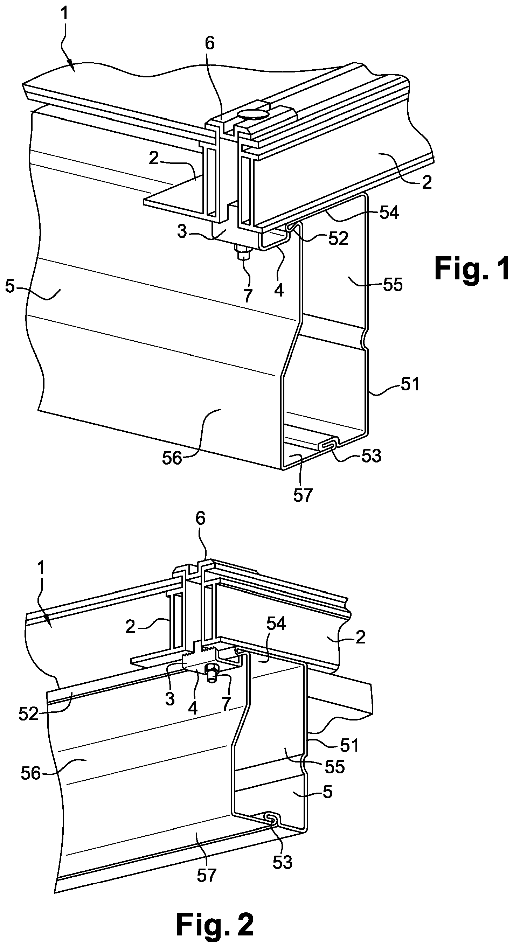

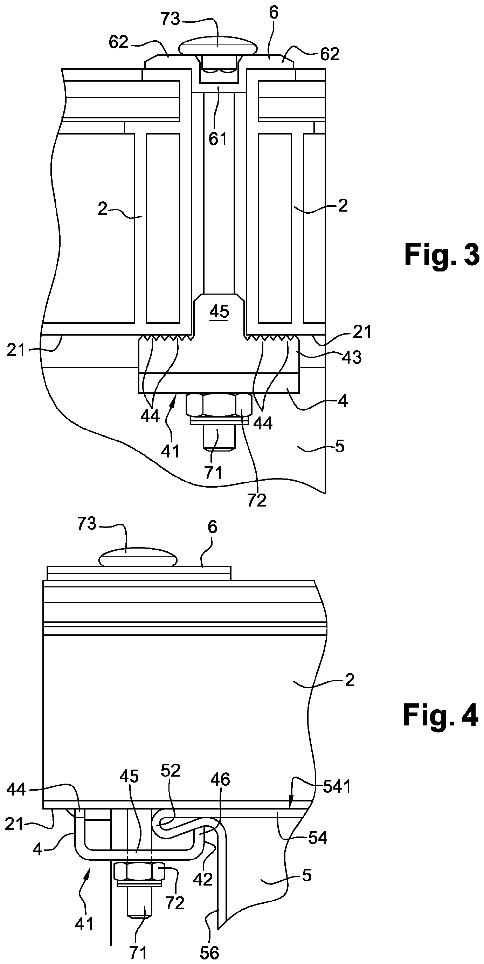

En référence aux figures 1 à 4, nous allons décrire une structure porteuse d'au moins un panneau selon l'invention. La structure porteuse selon l'invention comporte au moins un longeron 5 s'étendant selon une première direction parallèle à un axe longitudinal du longeron 5. Le longeron 5 est ici une poutre. Le longeron 5 est creux et présente, en section, une forme géométrique fermée qui est globalement rectangulaire. Le longeron 5 comporte une paroi 51 formée à partir d'une feuille de matériau métallique de faible épaisseur. Le longeron 5 comporte deux côtés latéraux 55 et 56 s'étendant à distance en regard l'un de l'autre et reliés l'un à l'autre par un côté supérieur 54 et un côté inférieur 57. Le matériau métallique de la feuille est de préférence conducteur de l'électricité, comme de l'acier, de l'aluminium ou l'un de leurs alliages. Le longeron 5 est obtenu par un procédé d'extrusion ou par un procédé de profilage à l'aide de galets (« roll-forming » selon la terminologie anglo-saxonne) de la feuille de matériau métallique qui est alors agrafée et/ou soudée 53 sur elle-même au niveau des bords latéraux longitudinaux, ici afin de former le coté inférieur 57. En variante, cette agrafe ou soudure peut former n'importe quel autre coté du longeron. Le longeron 5 comporte un rebord de prise 52 s'étendant en saillie, latéralement dans le prolongement du coté supérieur 54, de l'un 56 des côtés latéraux du longeron 5. Le rebord de prise 52 est réalisé par un pliage de la feuille de matériau, permettant d'avoir un rebord de prise 52 venue de matière avec le reste du longeron 5. Ce rebord peut également être le lieu de la fermeture du profilé (par une agrafe ou par soudage). Enfin, le coté supérieur 54 comporte une surface d'appui 541 qui se prolonge sur le rebord de prise 52.

La structure porteuse selon l'invention est destinée à recevoir au moins un panneau 1, comme par exemple un panneau solaire. Le panneau 1 comporte de préférence un cadre métallique 2 qui présente une face inférieure 21 sur les figures. Lors de la mise en place du panneau 1 sur la structure porteuse selon l'invention, la face inférieure 21 du cadre 2 est en appui sur la surface d'appui 541 du longeron 5, un axe longitudinal du cadre est alors perpendiculaire sensiblement avec l'axe longitudinal du longeron 5. Dans le cas d'un panneau 1 solaire, le cadre 2 du panneau 5 est métallique conducteur d'électricité et permet de ce fait de réaliser la mise à la terre du panneau solaire.

Afin de maintenir le panneau 1 en place sur le longeron 5, la structure porteuse selon l'invention comporte au moins un système de fixation 3 selon l'invention. Le système de fixation 3 selon l'invention comporte une bride 6 supérieure, un crapaud 4 inférieur et un élément de serrage 7,72 comprenant une vis 7 et un écrou 72.

La bride 6 est de forme générale en « T » en section comportant une queue 61 surmontée d'un chapeau dont les rebords 62 s'étendent perpendiculairement à la queue 61. Dans un mode de réalisation ici illustré, la queue 61 présente en section une forme en « U ». La base de la queue 61 de la bride 6 présente au moins un orifice apte à recevoir la vis 7 de l'élément de serrage. La vis 7 comporte, à une extrémité, une tête 73 et un filetage 71 à l'autre extrémité. Le filetage 71 est destiné à coopérer avec l'écrou 72.

Le crapaud 4 est, ici, en section de forme en « U ». Il comporte un fond 41 sensiblement plat, comportant un orifice traversant 45 destiné à recevoir à travers la partie filetage 72 de la vis 7. Latéralement, le crapaud 4 comporte une première branche 42 s'étendant sensiblement orthogonalement depuis un bord latéral du fond 41. La première branche 42 comporte à un sommet une première série de griffes 46 orientées dans le prolongement de la première branche 42. Au niveau d'un autre bord latéral du fond 41 opposé au bord latéral précédent, le crapaud comporte une deuxième branche 43 s'étendant sensiblement orthogonalement depuis cet autre bord latéral du fond 41, de manière sensiblement parallèle à la première branche 42 et en regard de celle-ci. La deuxième branche 43 comporte à un sommet une deuxième série de griffes 44 orientées dans le prolongement de la deuxième branche 43. La deuxième branche 43 comporte, en outre, à son sommet un doigt 45 s'étendant, lui aussi, dans le prolongement de la deuxième branche 43. Le doigt 45 est situé au milieu de la deuxième série de griffes 44 et s'étend au-dessus de celles-ci. Le doigt 45 présente une largeur sensiblement équivalente à une largeur de la queue 61 de la bride 6. De préférence, la première branche 42 présente une hauteur inférieure à une hauteur de la deuxième branche 43. La différence de hauteur entre les première 42 et deuxième 43 branches du crapaud 4 est de l'ordre d'une épaisseur du rebord de prise 52 du longeron 5.

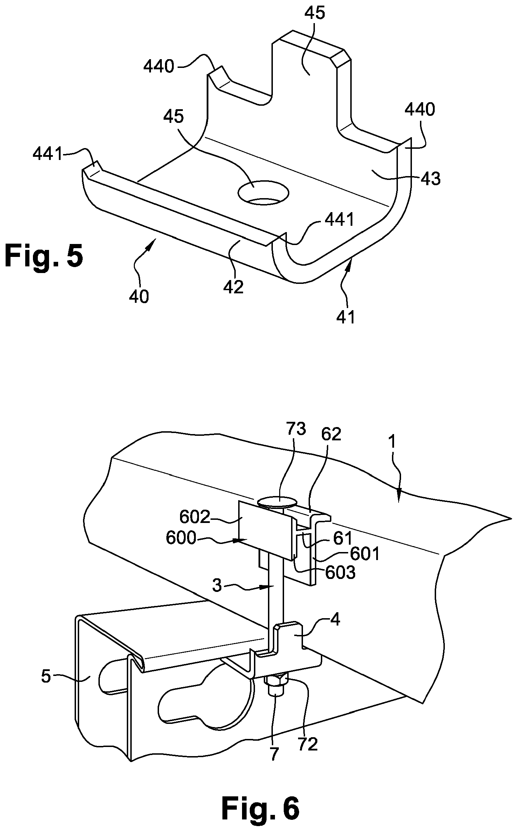

Dans une variante de réalisation illustrée à la figure 5, le crapaud 40 se différencie du crapaud 4 précédemment décrit par le fait que la première branche 42 comporte, à son sommet, deux griffes 441 orientées dans le prolongement de la première branche 42, chacune située au niveau d'un bord adjacent au bord latéral d'où s'étend la première branche 41. Ces deux griffes 441 forment une première série de griffes. De même, la deuxième branche 43 comporte, à son sommet, deux griffes 440 orientées dans le prolongement de la deuxième branche 42, chacune située au niveau d'un bord adjacent au bord latéral d'où s'étend la deuxième branche 43 et de part et d'autre du doigt 45. Ces deux griffes 440 forment une deuxième série de griffes.

Dans une autre variante de réalisation, le crapaud peut-être de forme quelconque globalement plane et comporté des griffes réparties sur au moins une partie des bords de la forme quelconque globalement plate du crapaud. Par exemple, le crapaud peut présenter une forme de coupelle. Dans une autre variante de réalisation, quelque soit sa forme, le crapaud ne comporte pas de griffes sur les bords de la forme. Un tel crapaud peut être utilisé pour fixer des panneaux qui ne comprennent pas de cadre, par exemple.

Le crapaud, quelque soit sa forme, peut être réalisé par emboutissage, par pliage ou par moulage.

Nous allons maintenant décrire un montage d'au moins un panneau solaire 1 sur une structure porteuse selon l'invention avec un système de fixation 3 selon l'invention qui viennent, tous deux, d'être décrits précédemment.

Une fois la structure porteuse selon l'invention mise en place sur le socle du module solaire la comprenant, au moins un panneau solaire 1 est positionné sur la structure porteuse selon l'invention en appui sur la surface d'appui 541 d'au moins un longeron 5 de la structure porteuse selon l'invention. Le panneau solaire 1 est positionné de telle sorte qu'une portion du cadre 2 ait son axe longitudinal sensiblement perpendiculaire à celui du longeron 5 et que la face inférieure 21 du cadre 2 vienne en appui sur la surface d'appui 541 du longeron 5. Ensuite, au moins un système de fixation 3 selon l'invention est mis en place. La bride 6 est positionnée de sorte qu'un des rebords 62 vienne en appui contre une face supérieure du cadre 2 du panneau 1, un coté latéral de la queue 61 de la bride 6 venant en appui contre une face latérale externe du cadre 2 du panneau 1. Le crapaud 4 ou 40 est positionné de sorte que la première série de griffes 46 ou 441 viennent griffer un dessous du rebord de prise 52 et une partie au mois de la deuxième série de griffes 44 ou 440 vienne griffer la surface inférieure 21 du cadre 2 du panneau 1, le doigt 45 venant s'étendre le long de la face latérale externe du cadre 2 du panneau 1, un coté du doigt pouvant venir en appui contre cette face latérale externe du cadre 2 du panneau 1. La vis 7 est ensuite mise en place : de préférence, il est enfilé par la bride 6, à travers l'orifice se trouvant sur la base de la queue 61, puis à travers l'orifice 45 du crapaud 4 ou 40. La vis s'étend alors entre la bride 6 et le crapaud 4 ou 40, le long et en regard de la face latérale externe du cadre 2 du panneau 1. L'écrou 71 est alors mis en place sur la partie filetée 71 de la vis 7 qui dépasse du crapaud 4 ou 40. Lors d'un serrage de l'écrou 72, le crapaud 4 ou 40 et la bride 6 se rapprochent l'un de l'autre, la première série de griffes 46 ou 441 pénètrent dans l'épaisseur du rebord de prise 52 du longeron 5, la deuxième série de griffes 44 ou 440 pénètrent dans une épaisseur du cadre 2 du panneau 1. Cela permet d'assurer une continuité électrique entre le panneau 1 et le longeron 5 afin d'assurer une parfaite mise à la terre dudit panneau 1. D'autre part, lors du serrage de la vis, le doigt 45 évite la rotation du crapaud 4 ou 40 autour d'un axe longitudinale de la vis 7. En variante, le dessous de la tête 73 de la vis 7 comporte au moins un méplat qui vient s'insérer entre les branches de la forme en « U » de la queue 61 de la bride 6 pour maintenir ledit boulon 7 immobile en rotation selon son axe longitudinal lors d'un serrage de l'écrou 72. Il est à noter qu'une telle structure porteuse selon l'invention associée à un système de serrage selon l'invention permet de faciliter un montage des panneaux 1 car la fixation définitive s'effectue par le dessous des panneaux 1 (c'est-à-dire du coté de la structure porteuse et des longerons 5) par un accès ainsi facilité au serrage (écrou 72) par le dessous.

Il est à noter que, la tête 73 de la vis 7 viens en appui au dessus du cadre 2 du panneau 1, ainsi la bride 6 travaille en compression et sa résistance est fortement accrue.

Lors de la mise en place de deux panneaux 1 adjacents, le système de fixation 3 selon l'invention est agencé de sorte à maintenir sur la structure porteuse selon l'invention les deux panneaux 1 de manière simultanée et similaire à ce qui vient d'être décrit. Dans ce cas, la queue 61 de la bride 6 et le doigt 45 du crapaud 4 ou 40 ont un rôle supplémentaire d'espacement entre les deux panneaux 1 ainsi maintenus sur la structure porteuse selon l'invention.

Une variante de réalisation de la bride 600 est illustrée en figure 6. Cette variante de réalisation de la bride 600 permet de fixer de manière optimale un seul panneau 1 sur le longeron 5, comme un panneau d'extrémité de rangée ou de colonne de panneaux adjacents. Nous allons décrire les éléments différentiant la bride 600 de la bride 6 précédemment décrite. La bride 600 ne comporte qu'un seul rebord 62 s'étendant perpendiculairement à la queue 61 en forme de « U ». La paroi verticale de la queue 61 au sommet de laquelle s'étend en saillie le rebord 62, se prolonge vers le bas sous le fond de la queue 61 par une paroi 601. Ainsi, lors d'une utilisation illustrée à la figure 5, la paroi 601 vient en appui contre un bord latéral du panneau 1 à fixer, ce qui empêche un basculement de la bride 600 et permet de sécurisé la fixation.

La paroi verticale opposée 602 de la queue 61, ne comporte pas de rebord s'étendant perpendiculairement à son sommet qui est au même niveau toutefois du rebord 62. Ainsi, lors d'une utilisation comme illustrée en figure 5, la tête 73 de la vis 7 vient en appui sur se sommet de la paroi verticale opposée 602 et sur le rebord 62. Comme précédemment, le dessous de la tête 73 de la vis 7 peut comporter au moins un méplat qui vient s'insérer entre les branches de la forme en « U » de la queue 61 de la bride 600 pour maintenir ledit boulon 7 immobile en rotation selon son axe longitudinal lors d'un serrage de l'écrou 72.

De plus, la paroi verticale opposée 602 se prolonge vers le bas sous le fond de la queue 61 et se termine par un rebord 603 venu de matière et s'étendant perpendiculairement vers la paroi 601. Ainsi, lors d'un serrage du système de fixation 3, l'appui de la tête 73 de la vis 7 a tendance à déformer la paroi verticale opposée 602 dans le sens d'une ouverture de la forme en « U » de la queue 61 de la bride 600. Cette déformation est stoppée par l'appui du rebord 603 contre la tige de la vis 7.

Dans une variante de réalisation, l'élément de serrage 7,72 comporte un système de rivet structural. L'utilisation de rivets structuraux permet d'assurer une meilleure sécurité et de tenue du serrage réalisé par l'élément de serrage lors de son utilisation. D'autre part, les rivets structuraux, du fait de leur agencement, permettent de jouer un rôle d'antivol, une fois en place.

Bien entendu, il est possible d'apporter à l'invention de nombreuses modifications sans pour autant sortir du cadre de celle-ci.

## Revendications

1. Système de fixation (3) d'au moins un panneau (1) sur une structure porteuse comportant au moins un longeron (5) s'étendant selon une première direction, le longeron comportant un rebord de prise (52) et une surface d'appui (541) du panneau, le système comprenant une bride (6;600), un crapaud (4;400) et un ensemble de serrage (7) liant la bride au crapaud agencés de sorte à prendre en sandwiche, lors d'un assemblage, le rebord de prise du longeron et le panneau en appui sur la surface d'appui du longeron, **caractérisé en ce que** le crapaud comporte une première série de griffes (46;441) située sur un premier rebord (42) du crapaud et s'étendant en saillie sensiblement parallèlement à un axe de l'ensemble de serrage en direction de la bride, les griffes de cette première série de griffes étant destinées à coopérer, par griffage, avec le rebord de prise du longeron, lors d'un assemblage et **en ce que** le crapaud comporte une deuxième série de griffes (44;440) située sur un deuxième rebord (43) du crapaud et s'étendant en saillie sensiblement parallèlement à l'axe de l'ensemble de serrage en direction de la bride, cette deuxième série de griffes étant destinées à coopérer, par griffage, avec un bord du panneau, lors d'un assemblage.

2. Système de fixation selon la revendication 1, **caractérisé en ce que** les premier et deuxième rebords du crapaud sont sensiblement parallèles l'un par rapport à l'autre et s'étendent en regard l'un de l'autre.

3. Système de fixation selon l'une des revendications 1 ou 2, **caractérisé en ce que** le crapaud comporte un doigt d'espacement (45) s'étendant en saillie sensiblement parallèlement à l'axe de l'ensemble de serrage en direction de la bride et agencé de sorte à venir latéralement en appui avec un bord du panneau, lors d'un assemblage.

4. Système de fixation selon l'une des revendications 1 à 3, **caractérisé en ce que** l'ensemble de serrage comporte une vis (7) et un écrou (72).

5. Système de fixation selon l'une des revendications 1 à 4, **caractérisé en ce que** l'ensemble de serrage comporte un rivet structurel.

6. Structure porteuse d'au moins un panneau (1) comportant au moins un longeron (5), comportant un rebord de prise (52), une surface d'appui (541) du panneau et s'étendant selon une première direction, et au moins un système de fixation (3) selon l'une des revendications 1 à 5, **caractérisé en ce que** le longeron comporte une paroi mince (51) et présente une section fermée.

7. Structure porteuse selon la revendication 6, **caractérisé en ce que** le rebord de prise s'étend dans le prolongement de la surface d'appui.

8. Structure porteuse selon la revendication 6 ou 7, **caractérisé en ce que** la paroi mince est formée d'une tôle métallique mise en forme.

9. Structure porteuse selon la revendication 8, **caractérisé en ce que** le rebord de prise est formé par un pliage ou soudage de la tôle mince sur elle-même.

## Patentansprüche

1. Befestigungssystem (3) mindestens einer Platte (1) an einer Trägerstruktur, umfassend mindestens einen Längsträger (5), der sich in eine erste Richtung erstreckt, wobei der Längsträger einen Greifrand (52) und eine Anlagefläche (541) der Platte aufweist, das System umfassend einen Flansch (6; 600), eine Klemmplatte (4; 400) und eine Klemmanordnung (7), die den Flansch mit der Klemmplatte verbindet, die angeordnet sind, um den Greifrand des Längsträgers und die Platte, die an der Anlagefläche des Längsträgers anliegt, beim Zusammenbau in Sandwichform einzuspannen, **dadurch gekennzeichnet, dass** die Klemmplatte eine erste Reihe von Klauen (46; 441) aufweist, die sich an einem ersten Rand (42) der Klemmplatte befinden und sich im Wesentlichen parallel zu einer Achse der Klemmanordnung in Richtung des Flanschs hervorstehend erstrecken, die Klauen dieser ersten Reihe von Klauen dazu bestimmt sind, beim Zusammenbau durch Einspannen mit dem Greifrand des Längsträgers zusammenzuwirken, und dass die Klemmplatte eine zweite Reihe von Klauen (44; 440) umfasst, die sich an einem zweiten Rand (43) der Klaue befinden und sich im Wesentlichen parallel zu der Achse der Klemmanordnung in Richtung des Flanschs hervorstehend erstrecken, wobei diese zweite Reihe von Klauen dazu bestimmt ist, beim Zusammenbau durch Einspannen mit einem Rand der Platte zusammenzuwirken.

2. Befestigungssystem nach Anspruch 1, **dadurch gekennzeichnet, dass** der erste und der zweite Rand der Klemmplatte im Wesentlichen parallel zueinander sind und sich einander gegenüber erstrecken.

3. Befestigungssystem nach einem der Ansprüche 1 oder 2, **dadurch gekennzeichnet, dass** die Klemmplatte einen Abstandhalterfinger (45) umfasst, die im Wesentlichen parallel zu der Achse der Klemmanordnung in Richtung des Flanschs hervorsteht und angeordnet ist, um beim Zusammenbau seitlich an einem Rand der Platte in Anlage zu kommen.

4. Befestigungssystem nach einem der Ansprüche 1 bis 3, **dadurch gekennzeichnet, dass** die Klemmanordnung eine Schraube (7) und eine Mutter (72) umfasst.

5. Befestigungssystem nach einem der Ansprüche 1 bis 4, **dadurch gekennzeichnet, dass** die Klemmanordnung einen Strukturniet umfasst.

6. Trägerstruktur mindestens einer Platte (1), umfassend mindestens einen Längsträger (5), umfassend einen Greifrand (52), eine Anlagefläche (541) der Platte und die sich in eine erste Richtung erstreckt, und mindestens ein Befestigungssystem (3) nach einem der Ansprüche 1 bis 5, **dadurch gekennzeichnet, dass** der Längsträger eine dünne Wand (51) umfasst und einen geschlossenen Querschnitt aufweist.

7. Trägerstruktur nach Anspruch 6, **dadurch gekennzeichnet, dass** sich der Greifrand in Verlängerung der Anlagefläche erstreckt.

8. Trägerstruktur nach Anspruch 6 oder 7, **dadurch gekennzeichnet, dass** die dünne Wand aus einem geformten Metallblech gebildet ist.

9. Trägerstruktur nach Anspruch 8, **dadurch gekennzeichnet, dass** der Greifrand durch Biegen oder Schweißen des dünnen Blechs an sich selbst gebildet ist.

## Claims

1. A system (3) for attaching at least one panel (1) to a supporting structure including at least one girder (5) extending in a first direction, the girder including a folded edge (52) and a bearing surface (541) of the panel, the system comprising a flange (6; 600), a retaining plate (4; 400) and an attachment assembly (7) attaching the flange to the retaining plate arranged so that on assembly the folded edge of the girder and the panel bearing against the bearing surface of the girder are sandwiched together, **characterized in that** the retaining plate includes a first set of teeth (46; 441) located on a first edge (42) of the retaining plate and projecting substantially parallel to an axis of the attachment assembly in the direction of the flange, the teeth of this first set of teeth being configured to engage with the folded edge of the girder by clamping onto it during assembly, and **in that** the retaining plate has a second set of teeth (44; 440) located on a second edge (43) of the retaining plate and projecting substantially parallel to the axis of the attachment assembly in the direction of the flange, this second set of teeth being configured to engage within one edge of the panel by clamping during assembly.

2. The attachment system according to claim 1, **characterized in that** the first and second edges of the retaining plate are substantially parallel to one another and extend opposite one another.

3. The attachment system according to one of claims 1 or 2, **characterized in that** the retaining plate includes a projecting spacer (45) projecting substantially parallel to the axis of the attachment assembly in the direction of the flange and arranged so as to bear laterally against an edge of the panel during assembly.

4. The attachment system according to one of claims 1 to 3, **characterized in that** the attachment assembly includes a screw (7) and a nut (72).

5. The attachment system according to one of claims 1 to 4, **characterized in that** the attachment assembly includes a structural rivet.

6. A supporting structure for at least one panel (1), comprising at least one girder (5) that includes a folded edge (52), a bearing surface (541) for the panel extending in a first direction, and at least one attachment system (3) according to one of claims 1 to 5, **characterized in that** the girder includes a thin wall (51) and has a closed cross-section.

7. The supporting structure according to claim 6, **characterized in that** the folded edge extends along an extension of the bearing surface.

8. The supporting structure according to claim 6 or 7, **characterized in that** the thin wall is formed of a shaped metal sheet.

9. The supporting structure according to claim 8, **characterized in that** the folded edge is formed by folding or welding the thin sheet onto itself.
